# EUROPÄISCHE PATENTANMELDUNG

(11) **EP 3 379 023 A1**
(43) Veröffentlichungstag der Anmeldung: **26.09.2018**
(21) Anmeldenummer: 17205930.5
(22) Anmeldetag: 07.12.2017
(51) Int. Cl.: E21B 47/00, G01B 17/00

(54) **VERFAHREN ZUM BESTIMMEN DER GEOMETRIE EINER TELESKOPIERBAREN KELLYSTANGE**

(30) Priorität: 20.03.2017 DE 102017002675
(71) Anmelder: Liebherr-Werk Nenzing GmbH, 6710 Nenzing (AT)
(72) Erfinder: Schlatter, Nicola, 6710 Nenzing (AT); Jussel, Patrick, 6700 Bludenz (AT)
(74) Vertreter: Laufhütte, Dieter

(57) **Zusammenfassung**

Die Erfindung betrifft ein Verfahren zum Bestimmen der Geometrie einer teleskopierbaren Kellystange einer Arbeitsmaschine mit wenigstens einer Bohreinrichtung, wenigstens einer Einrichtung zum Erfassen von Schwingungssignalen der Bohreinrichtung und wenigstens einer Einrichtung zum Erfassen der Länge der Kellystange, umfassend die Schritte:
Erfassen von Schwingungssignalen, die mit dem Aufsetzen eines Kellystangenelements auf ein anderes Kellystangenelement oder auf eine Kellydämpfung und/oder mit dem Anheben eines Kellystangenelements von einem anderen Kellystangenelement oder von einer Kellydämpfung korrelieren; und
Abspeichern wenigstens eines ersten Wertepaares umfassend eine Länge der Kellystange und wenigstens ein zugeordnetes Schwingungssignal, wobei das Wertepaar einem Kandidaten für einen Übergang der Kellystange entspricht.

## Beschreibung

Die Erfindung betrifft ein Verfahren zum Bestimmen der Geometrie einer teleskopierbaren Kellystange einer Arbeitsmaschine mit wenigstens einer Bohreinrichtung, wenigstens einer Einrichtung zum Erfassen von Schwingungssignalen der Bohreinrichtung und wenigstens einer Einrichtung zum Erfassen der Länge der Kellystange, umfassend die Schritte:
Erfassen von Schwingungssignalen, die mit dem Aufsetzen eines Kellystangenelements auf ein anderes Kellystangenelement oder auf eine Kellydämpfung und/oder mit dem Anheben eines Kellystangenelements von einem anderen Kellystangenelement oder von einer Kellydämpfung korrelieren; und
Abspeichern wenigstens eines ersten Wertepaares umfassend wenigstens eine Länge der Kellystange und wenigstens ein zugeordnetes Schwingungssignal, wobei das Wertepaar einem Kandidaten für für einen Übergang der Kellystange entspricht.

Aus dem Stand der Technik sind Arbeitsmaschinen zum Durchführen von Bohrarbeiten mittels einer Bohreinrichtung bekannt, die eine Kellystange nutzen. Dabei besteht die Problematik, dass die Kellystange oder einzelne Elemente der Kellystange herunterfallen können und dadurch Beschädigungen an der Arbeitsmaschine oder im Bereich der Arbeitsmaschine bewirkt werden können. Elemente der Kellystange können beispielsweise dann herunter fallen, wenn beim Teleskopieren der Kellystange Teile davon verklemmen oder mitgeschleppt werden und zu einem späteren Zeitpunkt unbeabsichtigt gelöst werden.

Um dieser Problematik zu begegnen ist es vorteilhaft, die Geometrie der Kellystange zu kennen und die Kellystange daher während eines Teleskopiervorgangs überwachen zu können. Allerdings kann die Geometrie einer Kellystange nicht ohne Weiteres bekannt sein und müsste gegebenenfalls umständlich ermittelt und in eine Regelung/Steuerung einer entsprechenden Arbeitsmaschine eingegeben werden oder anderweitig der Arbeitsmaschine bzw. deren Regelung/Steuerung zur Verfügung gestellt werden.

Aufgabe der Erfindung ist es ein Verfahren bereitzustellen, mittels dem eine Kellystangen-Geometrie automatisch oder überwiegend automatisch bestimmt werden kann, sodass anhand der bestimmten Kellystangen-Geometrie eine Überwachung der teleskopierten Kellystange insbesondere hinsichtlich des Mitschleppens und Verklemmens von Kellystangenelementen vereinfacht wird.

Diese Aufgabe wird erfindungsgemäß durch ein Verfahren mit den Merkmalen des Anspruchs 1 gelöst. Vorteilhafte Ausgestaltungen sind Gegenstand der Unteransprüche.

Demnach ist ein Verfahren zum Bestimmen der Geometrie einer teleskopierbaren Kellystange einer Arbeitsmaschine mit wenigstens einer Bohreinrichtung, wenigstens einer Einrichtung zum Erfassen von Schwingungssignalen der Bohreinrichtung und wenigstens einer Einrichtung zum Erfassen der Länge der Kellystange vorgesehen, umfassen die Schritte:
Erfassen von Schwingungssignalen, die mit dem Aufsetzen eines Kellystangenelements auf ein anderes Kellystangenelement oder auf eine Kellydämpfung und/oder mit dem Anheben eines Kellystangenelements von einem anderen Kellystangenelement oder von einer Kellydämpfung korrelieren; und
Abspeichern wenigstens eines ersten Wertepaares umfassend eine Länge der Kellystange und wenigstens ein zugeordnetes Schwingungssignal, wobei das Wertepaar einem Kandidaten für einen Übergang der Kellystange entspricht.

Es kann eine entsprechende Regelung/Steuerung vorgesehen sein, die mit den Einrichtungen der Arbeitsmaschine zum Durchführen des Verfahrens gekoppelt ist. Es kann ferner vorgesehen sein, dass die Regelung/Steuerung auf Daten bezüglich der Geometrie bzw. der Parameter der Arbeitsmaschine zugreifen kann und so beispielsweise erkennen kann, dass die Kellystange auf die Kellydämpfung aufsetzt oder von der Kellydämpfung angehoben wird.

Es können ferner Referenzschwingungssignale hinterlegt sein, welche es der Regelung/Steuerung ermöglichen zu erkennen, ob erfasste Schwingungssignale dem Aufsetzen eines Kellystangenelements auf ein anderes entsprechen oder dem Anheben eines Kellystangenelements von einem anderen entsprechen.

Wird ein entsprechendes Schwingungssignal erfasst, so kann gleichzeitig ein entsprechendes Signal bezüglich der Länge der Kellystange erfasst und/oder gespeichert werden. Die Länge und das zugeordnete Schwingungssignal bilden ein Wertepaar, welches einem Kandidaten für einen Übergang zwischen Kellystangenelementen entspricht. Ein Kandidat für einen Übergang stellt hier einen möglichen Übergang bzw. die entsprechenden Werte, also die Länge und das zugeordnete Schwingungssignal eines entsprechenden Übergangs dar. Ein Übergang bezeichnet vorliegend einen Bereich der Kellystange, in welchem das Absetzen bzw. Anheben eines Kellyelements bezogen auf ein anderes Kellyelement oder bezogen auf die Kellydämpfung stattfindet. Während Übergängen ändert sich der von einem Bohrtisch aufgenommene Anteil der Gewichtskraft der Kellystange.

Ein so ermittelter Kandidat stellt ein erstes, einfaches Modell der Kellystange dar, welches angeben kann, an welcher Position bzw. bei welcher Länge der Kellystange diese mit der Kellydämpfung wechselwirkt.

Die erfassten Schwingungssignale können beliebige Signale sein, die mit der Schwingung der Bohreinrichtung korrelieren. Es können somit beispielsweise zeitlich veränderte Auslenkungen oder Spannungen in Teilen der Bohreinrichtung oder in mit der Bohreinrichtung gekoppelten Komponenten sein.

In einer bevorzugten Ausführung ist denkbar, dass das Verfahren den Schritt umfasst:
Erstellen eines Modells der Kellystange aus wenigstens zwei unterschiedlichen Kandidaten für Übergänge der Kellystange.

Demnach können die Schritte des Anspruchs 1 und gegebenenfalls weitere Schritte des Verfahrens zwei oder mehrmals wiederholt werden, wobei die Kellystange in unterschiedlich weit ausgefahrenem Zustand analysiert werden kann. Entsprechend kann das so erstellte Modell wenigstens zwei unterschiedliche Kandidaten für Übergänge der Kellystange umfassen, welche sich auf Übergänge zwischen zwei unterschiedlichen Kellystangenelementen beziehen können.

In einem weiteren bevorzugten Ausführungsbeispiel ist denkbar, dass dem oder den Kandidaten eine bestimmte Konfidenz zugeordnet wird. Die Konfidenz kann dabei so zugeordnet werden, dass sie ein Maß für die Wahrscheinlichkeit dafür ist, dass der erfindungsgemäß ermittelte Kandidat tatsächlich einem Übergang der Kellystange entspricht. Die Konfidenz kann dabei beispielsweise erhöht werden, wenn mehr als ein Wertepaar ähnliche oder gleiche Längen und Schwingungssignale aufweist.

In einer weiteren bevorzugten Ausführung ist denkbar, dass das beim Aufsetzen eines Außenkellys auf die Kellydämpfung oder Anheben eines Außenkellys von der Kellydämpfung abgespeicherte Wertepaar dem Kandidaten für den ersten Übergang der Kellystange entspricht. Der erste Übergang der Kellystange kann dabei somit der Situation entsprechen, in welcher der Außenkelly auf die Kellydämpfung gesetzt oder von dieser angehoben wird.

In einer weiteren bevorzugten Ausführung ist denkbar, dass die Arbeitsmaschine eine Einrichtung zum Erfassen der Vorschubkraft der Bohreinrichtung umfasst, wobei die Vorschubkraft insbesondere kontinuierlich gemessen wird und mit dem Wertepaar oder den Wertepaaren abgeglichen wird. Das Abgleichen mit beispielsweise der Länge der Kellystange kann auch das Abspeichern der erfassten Vorschubkräfte bezogen auf die jeweilige Länge der Kellystange umfassen. Das Auftreten besonders hoher Vorschubkräfte kann dabei auf das Vorliegen eines Übergangs hinweisen und kann ferner die Erhöhung der Konfidenz eines entsprechenden Kandidaten bewirken.

In einer bevorzugten Ausführung ist denkbar, dass wenigstens drei Wertepaare abgespeichert werden, die drei unterschiedlichen Übergängen zugeordnet sind, wobei die Abstände zwischen benachbarten Übergängen verglichen werden und die Konfidenz der entsprechenden Kandidaten erhöht wird, wenn die Differenz der Abstände einen Grenzwert unterschreitet. Die Abstände zwischen benachbarten Übergangen ergeben sich hierbei aus den unterschiedlichen Längen der unterschiedlich weit ausgefahrenen Kellystange. Eine derartige Berücksichtigung der Abstände zwischen Übergängen steigert die Wahrscheinlichkeit, dass ein Kandidat für einen Übergang korrekt ermittelt wurde.

In einer weiteren bevorzugten Ausführung ist denkbar, dass das Verfahren die Wiederholung des Aufsetzens und/oder des Anhebens und die Überprüfung ob die Schwingungssignale bei gleichen Längenauftreten umfasst. Wenn verfahrensgemäß festgestellt wird, dass bei gleichen Längen Schwingungssignale bzw. ähnliche Schwingungssignale auftreten kann dies ebenfalls als Hinweis darauf interpretiert werden, dass bei der entsprechenden Länge ein Übergang auftritt.

In einer besonders bevorzugten Ausgestaltung der Erfindung kann vorgesehen sein, dass eine gesteigerte Konfidenz eines ermittelten Kandidaten festgelegt wird, wenn mehrfach Kandidaten mit gleichen oder ähnlichen Wertepaaren auftreten. Vermehrt kann vorliegend bedeuten, dass mehr als einmal an einer bestimmten Länge entsprechenden Schwingungssignale erfasst werden und damit entsprechende Kandidaten ermittelt werden. Die Ähnlichkeit von Wertepaaren kann so definiert sein, dass Längen und Schwingungssignale, die innerhalb von bestimmten Toleranzen liegen, als ähnlich definiert werden.

In einer weiteren bevorzugten Ausführung kann das Verfahren den Schritt umfassen:
Festlegen, dass ein Kandidat ein verifizierter Übergang ist, wenn dessen Konfidenz einen bestimmten Wert übersteigt.

Ein derartiger Grenzwert kann vom Fachmann so festgelegt werden, dass mit einer hinreichend hohen Wahrscheinlichkeit ein Übergang korrekt festgestellt wird.

In einer weiteren bevorzugten Ausführung kann vorgesehen sein, dass das Modell der Kellystange zum Erkennen des Verklemmens oder Mitschleppens eines Elements der Kellystange herangezogen wird. Wurde ein Modell der Kellystange erstellt, aus dem die Übergänge der Kellystange hervorgehen, so kann im Falle des Auftretens von Schwingungssignalen in anderen Bereichen als den Übergängen auf entsprechende Fehlfunktionen der Kellystange geschlossen werden. Werden solche Fehlfunktionen festgestellt, so kann als Reaktion auf die Feststellung ein Ausgabesignal ausgegeben werden, welches beispielsweise den Betrieb der Arbeitsmaschine anhält und/oder eine Bedienperson der Arbeitsmaschine darauf hinweist, dass eine Fehlfunktion vorliegt.

Weitere Einzelheiten und Vorteile der Erfindung sind anhand der in den Figuren beispielhaft gezeigten Ausführungen erläutert. Dabei zeigen:
- Figur 1:: Schematische Ansicht einer Arbeitsmaschine;
- Figur 2:: Schematische Darstellung des Erstellens eines Modells der Kellystange; und

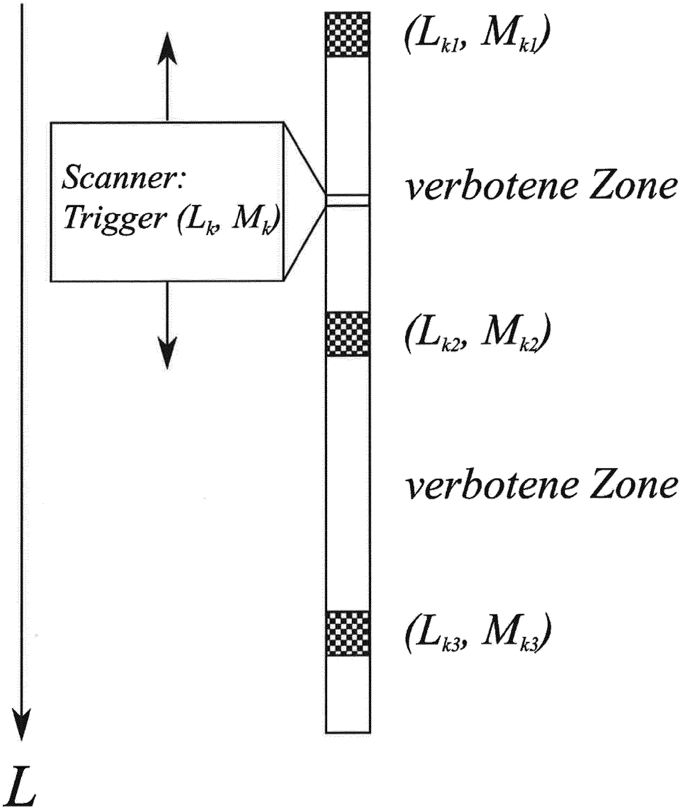

- Figur 3:: Schematische Darstellung des Feststellens eines Mitschleppens oder Verklemmens der Kellystange in Abhängigkeit von deren Modell.

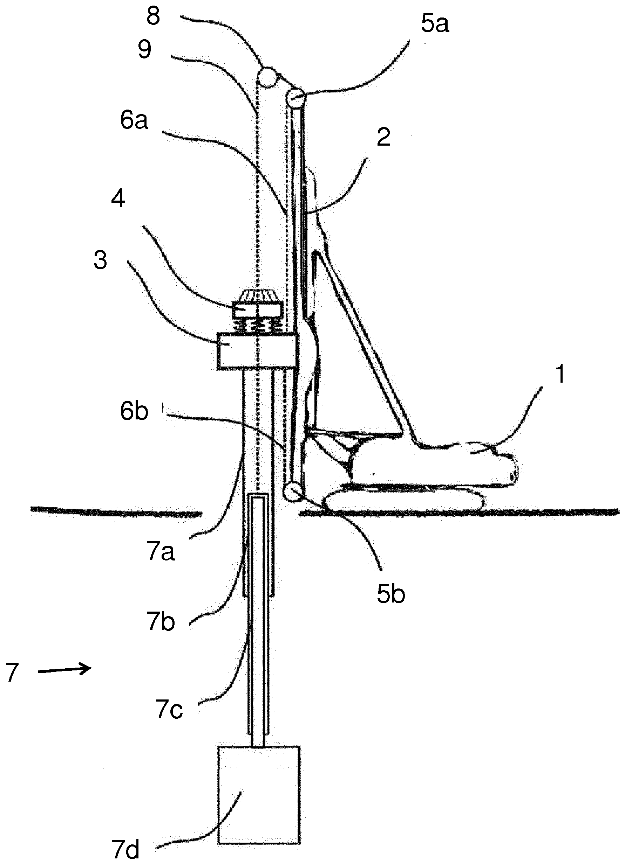

Figur 1 zeigt eine Arbeitsmaschine 1 mit einem Mäkler 2, an welchem ein vertikal beweglicher Bohrtisch 3 montiert ist. Die vertikale Position des Bohrtisches 3 kann mit Hilfe der Beseilung 6a, 6b welche über die Umlenkrollen 5a, 5b zu einer Seilwinde geführt wird, verändert werden. Auf dem Bohrtisch 3 befindet sich die Kellydämpfung 4, auf welcher die Kellystange 7 zum Bohren aufgesetzt werden kann.

Die Kellydämpfung 4 schützt den Bohrtisch 3 und sich darauf befindliche Maschinenteile vor Stößen beim Absetzen oder Anheben eines Kellyelements 7a, 7b, 7c der Kellystange 7. Die Kellydämpfung 4 besteht dabei üblicherweise aus Federpaketen oder aus einer Kombination aus Federpaketen und Dämpferelementen. Die Kellystange 7 und das Bohrwerkzeug 7d werden vom Kellyseil 9 gehalten, bzw. liegen diese beim Bohren zum Teil oder zur Gänze auf der Kellydämpfung 4 und damit auf dem Bohrtisch 3. Die Kellystange 7 ist eine teleskopierbare Bohrstange welche aus zwei oder mehreren Rohren besteht, die ineinander geführt werden und die axial zueinander beweglich sind. Die axiale Bewegung ist dabei über Anschläge an den Rohrenden begrenzt.

Die Länge Lₖ der austeleskopierten Kellystange 7 kann über eine Seillängenmessung des Kellyseils 9 und über die Seillänge des Bohrtisches 3 ermittelt werden. Folgende einfache Modellierung der Kellystange 7 ist nun möglich: wenn Lₖ₁ = 0m sitzt die Außenkelly 7a setzt auf der Kellydämpfung 4 auf und die Masse Mₖ₁ wirkt auf die Dämpfung 4. Wenn bei Lₖ₂ das nächste Kellyelement 7b auf die Außenkelly 7a aufsetzt, wird die Masse Mₖ entsprechend höher. Eine Kellystange 7 lässt sich also durch eine Liste von Zahlenpaaren beschreiben: ((Lₖ₁, Mₖ₁), (Lₖ₂, Mₖ₂), (Lₖ₃, Mₖ₃), ... (Lₖₘₐₓ, Mₖₘₐₓ)).

In weiterer Folge wird das Absetzen beziehungsweise Anheben eines Kellyelements 7a, 7b, 7c bei einer Länge L als Übergang bezeichnet. Dieses Modell kann in der hier vorgestellten Methode automatisiert erlernt. Die erste Voraussetzung für ein automatisiertes Erlernen ist eine Art Scanner, der beim Abteufen (oder Anheben) der Kellystange das Aufsetzen (oder Anheben) eines Kellyelementes 7a, 7b, 7c als solches erkennt und dann ein entsprechendes Zahlenpaar (Lₖ, Mₖ) erzeugt: bei der Kellylänge Lₖ beträgt das Gewicht der Kellyelemente 7a, 7b, 7c auf dem Bohrtisch Mₖ.

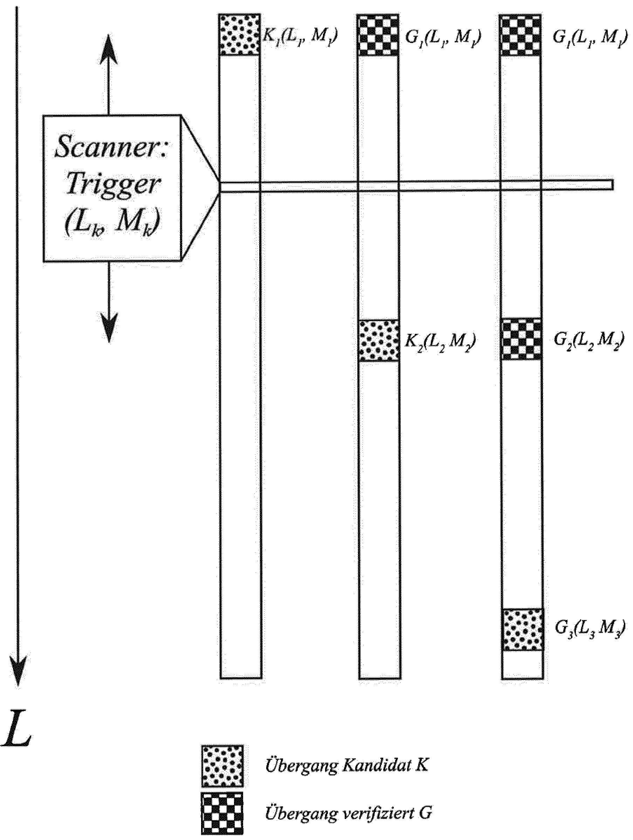

Folgende Methode wird nun vorgestellt, um automatisiert die Geometrie zu erlernen: wie in Figur 2 anhand der linken vertikalen Säule dargestellt ist zunächst die Kellystangengeometrie unbekannt, es existiert kein Modell dieser Kellystange 7. Beim ersten Absenken einer Kellystange 7 kann nun durch den Vergleich der Tischseillänge 6a, 6b und der Kellyseillänge 9 festgestellt werden, dass sich der Flansch der Außenkelly 7a direkt über der Kellydämpfung 4 befindet.

Wird nun die Außenkelly 7a auf der Dämpfung 4 abgesetzt, erzeugt der Scanner ein Zahlenpaar (Lₖ, Mₖ) (1), wobei nun die Seillängen von Tisch 3 und Kelly 7 auf null abgeglichen werden. Dieses erste Zahlenpaar ist nun ein Kandidat für einen Übergang K₁. Dieses Erkennen eines Übergangs kann dem Fahrer in beliebiger Form mitgeteilt werden z.B. akustisch oder per Warnung an einem Bildschirm. Wenn nun die Kellystange 7 wieder angehoben wird, dann kann der Scanner wieder ein Signal (Lₖ, Mₖ)(2) erzeugen, wenn die Außenkelly 7a von der Kellydämpfung 4 abgehoben wird.

Ist nun diese Messung (2) statistisch kompatibel mit der Messung (1), so steigt die Konfidenz in diesen Kandidaten K₁. Beim neuerlichen Absenken wird nun eine dritte Messung (Lₖ, Mₖ) (3) erzeugt, und so weiter. Ab einer gewissen Konfidenz wird nun aus einem Kandidaten eines Übergangs K₁ ein verifizierter Übergang G₁. Der erste Teil eines Kellymodells ist erzeugt: ((Lₖ₁, Mₖ₁)). Wenn nun der zweite Übergang beim wiederholten Absenken und Anheben der Kellystange 7 angefahren wird, ist diese Methode wieder anzuwenden, es wird ein neuer Kandidat K₂ erzeugt, der durch Wiederholung zu einem verifizierten Übergang G2 wird, das Kellymodell wird nun erweitert zu ((Lₖ₁, Mₖ₁), (Lₖ₂, Mₖ₂)), und so weiter bis das vollständige Kellymodell ((Lₖ₁, Mₖ₁), (Lₖ₂, Mₖ₂), (Lₖ₃, Mₖ₃), ... (Lₖₘₐₓ, Mₖₘₐₓ))erlernt wurde. Dieses Modell kann in der Maschinensteuerung bzw. der Regelung/Steuerung für eine spätere Verwendung abgespeichert werden und in weiterer Folge von einem Mitschlepp- und Verklemmassistenten verwenden werden, um Mitschleppen oder Verklemmen zu erkennen.

Um die notwendige Anzahl von Signalen gering zu halten und einen Kandidaten rasch in einen verifizierten Übergang übergehen zu lassen können folgende Rahmenbedingungen herangezogen werden: beim ersten Punkt im Kellymodell muss die Position des Flansches der Außenkelly 7a in etwa mit der Höhe des Bohrtisches 3 übereinstimmen. Ferner sollen die Abstände zwischen den Positionen in etwa gleich groß sein. Wenn also L1 = 0m ist, L2 = 10m, dann ist nicht bei L = 14m ein weitere Punkt zu erwarten, sondern erst wieder bei etwa 20m. Auch wenn bereits L1 = Om und L2 = 10m als verifizierte Übergange gefunden wurden, so ist kein neuer Punkt zwischen diesen Beiden Punkten zu erwarten.

Die zweite Voraussetzung um mehr Details über eine Kellystange 7 automatisiert zu erkennen ist ein statistisches Modell, das während des Bohrens durch eine kontinuierliche Messung der Vorschubkraft am Bohrtisch 3 und einen Abgleich mit der Länge der Kellystange 7 eine Häufung von Punkten in diesem Phasenraum findet und dadurch einer bestimmten Länge eine Verriegelungsebene zwischen zwei Kellystangenelementen 7a, 7b, 7c zuweist.

Folgendes Anwendungsbeispiel soll dies verdeutlichen: ein Fahrer senkt die Außenkelly 7a auf die Kellydämpfung 4 ab, wobei L = 0m gilt. Dann wird die nächste innere Kelly 7b bis zu einer bestimmten, ihm bekannten Verriegelungsebene abgefahren, beispielsweise bei L = 4m. Nun wird der Bohrantrieb aktiviert, die Kellystangen 7a, 7b, 7c verriegeln zueinander. Nun kann der Fahrer mit dem Zugseil des Bohrtisches 6a, 6b das Werkzeug 7d anpressen. Nur wenn die Kellystangenelemente 7a, 7b, 7c verriegelt sind kann mit einer großen Vorschubkraft das Werkzeug 7d über den Bohrtisch 3 in den Boden gedrückt werden. Wenn also beim Bohren die Zugkraft einen bestimmten Grenzwert überschreitet, könnte es sich bei dieser Kellylänge um eine Verriegelungsebene handeln. Dieses Verhalten wird aufgezeichnet, es entsteht ein Kandidat für eine Verriegelungsebene Kᵥ₁(L). Nun wiederholt der Fahrer dieses Verriegeln an derselben Stelle, dadurch wird die Konfidenz dieses Kandidaten erhöht, bis aus einem Kandidaten Kᵥ₁ eine verifizierte Verriegelungsebene Kᵥ₁ wird. Durch Bohren in den verschiedensten Verriegelungsebenen können so die verschiedenen entsprechenden Kellylängen gefunden und abgespeichert werden.

## Patentansprüche

1. Verfahren zum Bestimmen der Geometrie einer teleskopierbaren Kellystange (7) einer Arbeitsmaschine mit wenigstens einer Bohreinrichtung, wenigstens einer Einrichtung zum Erfassen von Schwingungssignalen der Bohreinrichtung und wenigstens einer Einrichtung zum Erfassen der Länge der Kellystange (7), umfassend die Schritte:
Erfassen von Schwingungssignalen, die mit dem Aufsetzen eines Kellystangenelements (7a, 7b, 7c) auf ein anderes Kellystangenelement (7a, 7b, 7c) oder auf eine Kellydämpfung (4) und/oder mit dem Anheben eines Kellystangenelements (7a, 7b, 7c) von einem anderen Kellystangenelement (7a, 7b, 7c) oder von einer Kellydämpfung (4) korrelieren; und
Abspeichern wenigstens eines ersten Wertepaares umfassend wenigstens eine Länge der Kellystange (7) und wenigstens ein zugeordnetes Schwingungssignal, wobei das Wertepaar einem Kandidaten für einen Übergang der Kellystange (7) entspricht.

2. Verfahren nach Anspruch 1, **gekennzeichnet durch** den Schritt:
Erstellen eines Modells der Kellystange aus wenigstens zwei unterschiedlichen Kandidaten für Übergänge der Kellystange (7).

3. Verfahren nach Anspruch 1 oder 2, **dadurch gekennzeichnet, dass** dem oder den Kandidaten eine bestimmte Konfidenz zugeordnet wird.

4. Verfahren nach einem der vorhergehenden Ansprüche, **dadurch gekennzeichnet, dass** das beim Aufsetzen eines Außenkellys (7a) auf die Kellydämpfung (4) oder Anheben eines Außenkellys (7a) von der Kellydämpfung (4) abgespeicherte Wertepaar dem Kandidaten für den ersten Übergang der Kellystange (7) entspricht.

5. Verfahren nach einem der vorhergehenden Ansprüche, **dadurch gekennzeichnet, dass** die Arbeitsmaschine eine Einrichtung zum Erfassen der Vorschubkraft der Bohreinrichtung umfasst, wobei die Vorschubkraft insbesondere kontinuierlich gemessen wird und mit dem Wertepaar oder den Wertepaaren abgeglichen wird.

6. Verfahren nach einem der vorhergehenden Ansprüche, **dadurch gekennzeichnet, dass** wenigstens drei Wertepaare abgespeichert werden, die drei unterschiedlichen Übergängen zugeordnet sind, wobei die Abstände zwischen benachbarten Übergängen verglichen werden und die Konfidenz der entsprechenden Kandidaten erhöht wird, wenn die Differenz der Abstände einen Grenzwert unterschreitet.

7. Verfahren nach einem der vorhergehenden Ansprüche, **dadurch gekennzeichnet, dass** das Verfahren die Wiederholung des Aufsetzens und/oder des Anhebens und Überprüfung ob die Schwingungssignale bei gleichen Längen auftreten.

8. Verfahren nach Anspruch 7, **dadurch gekennzeichnet, dass** eine gesteigerte Konfidenz ermittelter Kandidaten festgelegt wird, wenn mehrfach Kandidaten mit gleichen oder ähnlichen Wertepaaren auftreten.

9. Verfahren wenigstens nach Anspruch 3, **gekennzeichnet durch** den Schritt:
Festlegen, dass ein Kandidat ein verifizierter Übergang ist, wenn dessen Konfidenz einen bestimmten Wert übersteigt.

10. Verfahren wenigstens nach Anspruch 2, **dadurch gekennzeichnet, dass** das Modell der Kellystange (7) zum Erkennen des Verklemmens und/oder Mitschleppens eines Elements der Kellystange (7) herangezogen wird.
